Europäisches Patentamt

European Patent Office

Office européen des brevets

(11) Veröffentlichungsnummer: **0 002 788**
**A1**

# EUROPÄISCHE PATENTANMELDUNG

(21) Anmeldenummer: **78101770.2**

(22) Anmeldetag: **19.12.78**

(51) Int. Cl.²: **G 01 K 1/02,** G 01 K 13/00,
G 01 K 7/24, A 61 B 5/00

(30) Priorität: **21.12.77 DE 2757124**

(43) Veröffentlichungstag der Anmeldung: **11.07.79**
**Patentblatt 79/14**

(84) Benannte Vertragsstaaten: **CH FR GB NL**

(71) Anmelder: **SIEMENS AKTIENGESELLSCHAFT Berlin
und München, Postfach 261, D-8000 München 22 (DE)**

(72) Erfinder: **Gansimeier, Michael, Post Hohentann 14,
D-8301 Grafenhaun (DE)**
Erfinder: **Wünschmann, Horst, Steinstrasse 39, D-8000
München 80 (DE)**

(54) **Medizinisches Thermometer mit digitaler Anzeigevorrichtung des Temperaturwertes der Körpertemperatur.**

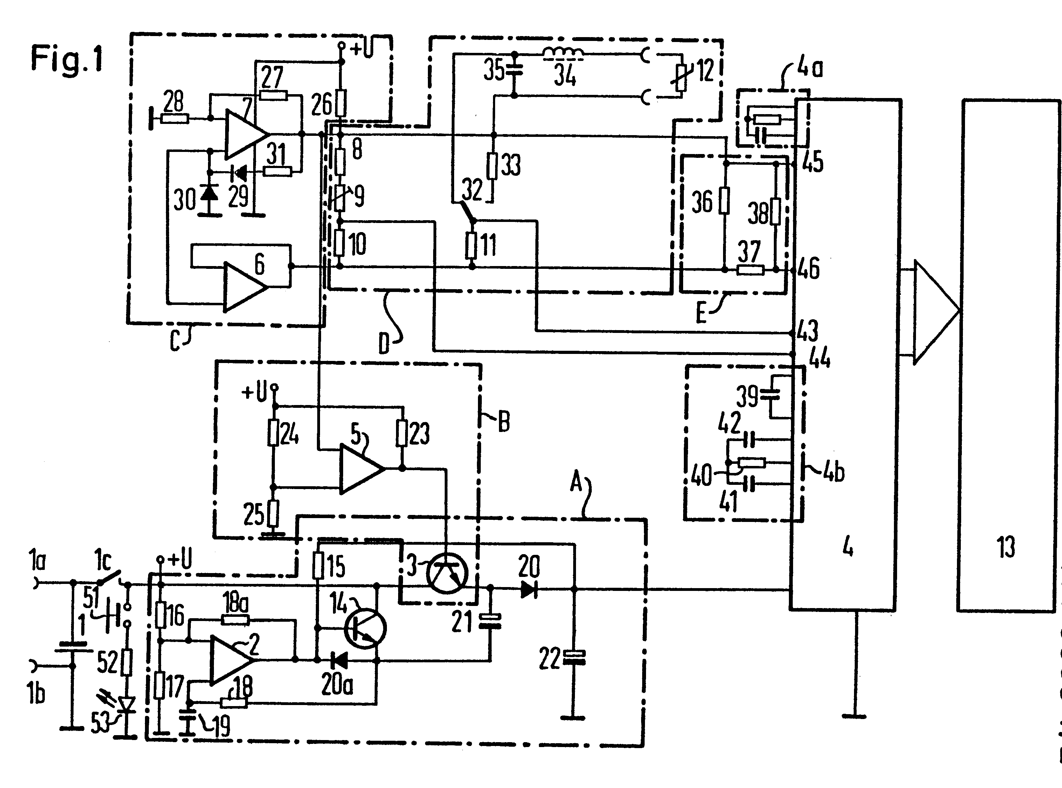

(57) Die Erfindung betrifft ein Thermometer mit digitaler Anzeigevorrichtung des Temperaturwertes der Körpertemperatur, das einen Temperaturfühler mit einem Heißleiter und ein mit mittels eines Kabels verbundenes Gerät enthält, in welchem die Anzeigevorrichtung, die elektronische Schaltung, die Spannungsquelle und die Schalter untergebracht sind, wobei die elektronische Schaltung aus einer Spannungsvervielfachung (A), einer Kontrollschaltung (B), einer Teilschaltung (C) für hochkonstante Spannung, einer Brückenschaltung (D) aus vier hochkonstanten Widerständen (8, 9, 10, 11) und dem als Fühler geschalteten Heißleiter (12), einer Teilschaltung (E) zur Anpassung der von der Brückenschaltung (D) erzeugten Spannung und einer integrierten Schaltung (4) mit einem 3½stelligen Digital-Voltmeter besteht, die die Anzeigevorrichtung (13) direkt ansteuert (Fig. 1).

SIEMENS AKTIENGESELLSCHAFT     Unser Zeichen
Berlin und München     VPA 77 P 8 0 5 8 EPC

Medizinisches Thermometer mit digitaler Anzeigevorrichtung des Temperaturwertes der Körpertemperatur

Die Erfindung betrifft ein Thermometer mit digitaler Anzeigevorrichtung des Temperaturwertes der Körpertemperatur, das einen Temperaturfühler mit einem Heißleiter als elektrischem Fühlerelement und ein mittels eines Kabels damit elektrisch und ggf. mechanisch verbundenes Gerät enthält, in welchem die digitale Anzeigevorrichtung und eine elektronische Schaltung untergebracht sind, die aus einer Verschaltung von integrierten Schaltungen, Transistoren und passiven Bauelementen besteht, den analog zur Abhängigkeit von der Temperatur des Körpers sich einstellenden Widerstandswert des Heißleiters zur digitalen Anzeige umwandelt und von einer stabilisierten Spannungsquelle gespeist wird.

Das Thermometer dient zur Messung der Körpertemperatur bei Menschen und Tieren.

Bck 1 Zi / 19.12.1977

0002788

Ein solches medizinisches Thermometer ist bekannt und befindet sich seit langer Zeit auf dem Markt. Bei diesem bekannten Thermometer wird der von einem als Fühler ausgebildeten Heißleiter erzeugte Widerstandswert in den Rückkopplungszweig eines Operationsverstärkers geschaltet und damit die an den anderen Eingang dieses Operationsverstärkers angelegte konstante Spannung geregelt. Dadurch entsteht am Ausgang des Operationsverstärkers in Abhängigkeit von der Temperatur des Körpers eine unterschiedlich hohe Spannung. Diese Ausgangsspannung des Operationsverstärkers wird im Zusammenwirken mit weiteren Operationsverstärkern und einer relativ komplizierten Schaltung auf den Eingang eines Analog-Digital-Wandlers gegeben. In weiteren integrierten Schaltungen, die jeweils als separate Bausteine ausgebildet sind, wird dieses Signal in Verbindung mit notwendigerweise vorhandenen mehreren Transistoren zur Anzeige gebracht. Als Anzeigevorrichtung kann hierbei ein LED- oder ein LCD-Display eingesetzt werden. Solche Anzeigevorrichtungen sind an sich hinreichend bekannt.

Die Notwendigkeit mehrerer separater Bausteine innerhalb der Schaltung und auch die Anwendung von wenigstens fünf Transistoren für die Anzeigevorrichtung bringt es mit sich, daß das bekannte Gerät in den äußeren Abmessungen nicht nur verhältnismäßig groß ist, sondern daß auch wegen des erforderlichen Aufwandes dieses Gerät aus Preisgründen nur in Fachkreisen und auch dort nur in begrenztem Umfang Anwendung findet.

Der vorliegenden Erfindung liegt die Aufgabe zugrunde, ein medizinisches Thermometer zu schaffen, bei dem weniger separate Bausteine in Form von integrierten Schaltungen und weniger Transistoren zur Anwendung kommen, so daß das Gerät in den äußeren Abmessungen kleiner ausgebildet werden kann und im Preis wesentlich billiger wird. Die äußeren Abmessungen sind von Bedeutung, um das Gerät beispielsweise auch in der Tasche eines Anzugs oder Kittels mitführen zu können. Ferner ist es Aufgabe der Erfindung, die Arbeitsweise des Gerätes temperaturstabiler zu gestalten, wofür eventuelle Einflüsse der Umgebungstemperatur ausgeschaltet werden sollen.

Zur Lösung dieser Aufgabe ist das medizinische Thermometer der eingangs angegebenen Art erfindungsgemäß dadurch gekennzeichnet, daß die elektronische Schaltung wie folgt aufgebaut ist:

a) eine von einer Spannungsquelle gespeiste Spannungsvervielfachung A mit einem Operationsverstärker speist über einen Abschalttransistor eine als Baustein ausgeführte integrierte Schaltung;

b) diese integrierte Schaltung ist ein an sich bekanntes komplettes 3 1/2stelliges Digital-Voltmeter, bestehend aus Analog-Digital-Wandler, Impulszähler, Decodierer, Anzeigeaufbereitung und Schaltungselementen, die die Wirkungsweise und den Meßbereich der integrierten Schaltung bestimmen;

c) eine der Überwachung der Spannungsquelle dienende Kontrollschaltung B mit einem Operationsverstärker schaltet bei einer für die Temperaturmessung zu geringen Batteriespannung den Transistor und unterbricht damit die Versorgungsspannung für die integrierte Schaltung;

d) eine Teilschaltung C mit zwei Operationsverstärkern erzeugt eine hochkonstante Spannung, die über Eingänge als Referenzspannung für die integrierte Schaltung und auch als Speisespannung für eine Brückenschaltung D dient;

e) die Brückenschaltung D besteht aus vier hochkonstanten Widerständen und dem als Fühler geschalteten Heißleiter;

f) eine Teilschaltung E paßt die von der Brückenschaltung erzeugte Spannung der für die integrierte Schaltung notwendigen Referenzspannung an;

g) von der integrierten Schaltung wird die Anzeigevorrichtung direkt angesteuert.

Vorzugsweise sind die vier Operationsverstärker in einem separaten Baustein untergebracht.

Durch die Erfindung werden folgende Vorteile erzielt:

1. Durch die Ausnutzung der durch eine Brückenschaltung entstehenden Brückenspannung einerseits für das Meßsignal und andererseits für die Referenzspannung, d.h. daß die hochkonstante Spannung einmal als Brückenspannung und einmal als Referenzspannung ausgenutzt wird, wird Unabhängigkeit des Gerätes von einer Umgebungstemperatur erreicht, weil - wie nachfolgend gezeigt wird - nicht mehr die Brückenspannung maßgebend ist, sondern es sind die Verhältnisse der Widerstände der Brückenschaltung entscheidend, die aber wegen der Verwendung hochkonstanter Metallfilmwiderstände praktisch von Schwankungen der Umgebungstemperaturen unabhängig sind.

2. Die durch die Schaltung ermöglichte Verringerung der Zahl der aktiven und passiven Bauelemente führt zu einer Verringerung der Abmessungen auf 65 x 95 x 17mm und damit des Gewichtes des Gerätes und auch zu einer
Verringerung des Preises.

Umgebungstemperatur bedeutet hierbei, daß in einem Bereich von -5 bis +50° C bei drei unterschiedlichen Meßtemperaturen nur eine Abweichung der Anzeige vom wirklichen Wert von maximal ± 0,1° C auftreten darf. Dabei ist für die Umgebungstemperatur die Temperatur des Gerätes, in welchem die elektronische Schaltung untergebracht ist, maßgebend.

Die Erfindung wird nachfolgend näher erläutert.

Fig. 1 zeigt das bevorzugte Schaltschema;

Fig. 2 zeigt das Thermometer (schematisch).

Als Bezeichnung der einzelnen Teilschaltungen bzw. Bauelemente dienen in den Figuren die nachfolgend aufgeführten Bezugszeichen.

A ist eine Spannungsvervielfacher-Schaltung, bestehend aus an sich bekannter Multivibratorschaltung (mit Operationsverstärker 2 und Transistor 14) mit dem zugehörigen Lastwiderstand 15, den Spannungsteilerwiderständen 16 und 17 und dem Zeitglied (RC-Glied 18 und 19) und einem Transistor 3, der in der Spannungsvervielfacher-Schaltung A nur als Gleichrichter arbeitet. Ferner gehören zu A noch die Dioden 20 und 20a und die Kondensatoren 21 und 22. Parallel zum Operationsverstärker 2 liegt der Widerstand 18a, der als positive Rückführung dient. Durch diesen Widerstand 18a wirkt die Multivibratorschaltung astabil.

Mit der Taste 51 wird bei Bedarf (mangelnde Umgebungshelligkeit) der Stromkreis von +U über den Widerstand 52 und die Leuchtdiode 53 nach Masse geschlossen. Mit dem Licht der Leuchtdiode wird dann die Anzeigevorrichtung 13 (LCD-Display) seitlich beleuchtet, wie dies z.B. bei Uhren mit LCD-Anzeige bekannt ist.

B ist eine Kontrollschaltung mit einem Operationsverstärker 5, einem Lastwiderstand 23 und Spannungsteilerwiderständen 24 und 25. Bei der Kontrollschaltung B wirkt der Transistor 3 als Schalttransistor, der dann ausgelöst wird, wenn eine für die Temperaturmessung unzureichende Spannung vorliegt.

C ist eine Teilschaltung mit den Operationsverstärkern 6 und 7, zu der der Lastwiderstand 26, die Spannungsteilerwiderstände 27 und 28 für die negative Rückkopplung, die beiden Zenerdioden 29 und 30 und der Vorwiderstand 31 gehören.

D ist eine Brückenschaltung, für die vier Metallschichtwiderstände 8, 9, 10 und 11 mit hoher Konstanz und der als Fühler geschaltete Heißleiter 12 miteinander verschaltet sind. Der Widerstand 9 ist veränderbar und dient zum Abgleich der Brücke. Der Heißleiter 12 (NTC) ist ein an sich bekanntes Bauelement aus Oxidwerkstoff mit negativer Widerstands-Temperatur-Kennlinie. Anstelle des Fühlerwiderstandes 12 kann mit Hilfe der Taste 32 ein Prüfwiderstand 33 zu Kontrollzwecken in die Schaltung eingeschaltet werden. Dieser Widerstand 33 ist so dimensioniert, daß bei funktionsgerechter Betriebsspannung auf der Digital-Anzeigevorrichtung 13 der Wert 38,5° C angezeigt wird, der damit als Maß für die funktionsgerechte Arbeitsweise des Gerätes dient. Ferner ist ein Entstörglied eingebaut, das aus der Drossel 34 und dem Kondensator 35 besteht. Dieses Entstörglied bildet einen Tiefpaß für Hochfrequenzstörungen.

E ist eine Teilschaltung, die die von der Brückenschaltung D erzeugte Spannung, die an einem Widerstand 36 liegt, der für die integrierte Schaltung 4 notwendigen Referenzschaltung anpaßt. Die Teilschaltung E enthält ferner einen variablen Widerstand 37, der zu Abgleichzwecken dient, und einen Widerstand 38.

4 ist eine integrierte Schaltung in Form eines separaten Bausteins, der handelsüblich ist und beispielsweise in dem Prospekt der Firma Intersil, ICL 7106 und ICL 7107 - erschienen in deutscher Sprache im Juli 1977 - beschrieben ist. Diese integrierte Schaltung 4 ist ein komplettes 3 1/2-stelliges Digital-Voltmeter, das integriert einen Analog-Digital-Wandler, Impulszähler, Decodierer und die Anzeigeaufbereitung enthält. Für die Wirkungsweise dieser integrierten Schaltung 4 sind die Zusatzschaltelemente 4a und 4b erforderlich, die die Wirkungsweise und den Meßbereich der integrierten Schaltung 4 bestimmen.

Durch die Zuschaltelemente 4a, enthaltend einen Widerstand und einen Kondensator, wird die Taktfrequenz des internen Oszillators bestimmt. Die Zuschaltelemente 4b bestehen aus einem Referenzkondensator 39, den Integrationsgliedern 40 und 41 und einem Kondensator 42 für die automatische Nullpunkt-Korrektur.

13 ist die Anzeigevorrichtung, die im vorliegenden Fall entweder ein LED-Display oder ein LCD-Display sein kann.

Die Spannungsquelle 1 (6 Volt) kann eine Batterie oder ggf. auch aufladbarer Akkumulator sein; für letzteres sind die Ladebuchsen 1a und 1b vorgesehen. Die Versorgung der Schaltung mit der Spannung (+ U) wird durch den Schalter 1c eingeschaltet.

An den Eingängen 43 und 44 der integrierten Schaltung 4 liegt die Spannung $\Delta U_{ein}$ an. An den Eingängen 45 und 46 der integrierten Schaltung 4 liegt die Spannung $\Delta U_{ref}$ an. Die gesamte Schaltung wirkt, wie es im Patentanspruch beschrieben ist.

Um den Vorteil der vorliegenden Erfindung herauszustellen, dienen die nachfolgenden Ausführungen.

Die Gleichung für einen Dual-slop-Umsetzer lautet bekanntermaßen:

$$\text{Anzeige} = \frac{\Delta U_{ein}}{\Delta U_{ref}} \cdot \text{Koeffizient} \qquad (I)$$

Der Dezimalpunkt wird durch die Beschaltung des Displays so festgelegt, daß in der Gleichung (I) der Koeffizient 100 beträgt

$$\text{Anzeige} = \frac{\Delta U_{ein}}{\Delta U_{ref}} \cdot 100 \qquad (II)$$

Die Spannung $\Delta U_{ein}$ wird durch eine Brückenschaltung gebildet. Diese Spannung ergibt sich aus nachfolgender Gleichung.

$$\Delta U_{ein} = \left( \frac{R(8) + R(9)}{R(8)+R(9)+R(10)} - \frac{R(12)}{R(12)+R(11)} U_{Br} \right) (III)$$

Die Spannung $U_{ref}$ wird durch einen Spannungsteiler aus der Brückenspannung $U_{Br}$ gebildet. Diese Spannung ergibt sich aus nachfolgender Gleichung.

$$\Delta U_{ref} = \frac{R(38)}{R(38)+R(37)} \cdot U_{Br} \qquad (IV)$$

Einsetzen der Gleichungen III und IV in die Gleichung II ergibt die nachfolgende Gleichung

$$\text{Anzeige} = \frac{\dfrac{R(8)+R(9)}{R(8)+R(9)+R(10)} - \dfrac{R(12)}{R(12)+R(11)} \cdot U_{Br}}{\dfrac{R(38)}{R(38)+R(37)} \cdot U_{Br}} \cdot 100 \quad (V)$$

Aus der Gleichung (V) erkennt man, daß die Brückenspannung $U_{Br}$ im Zähler und im Nenner vorkommt, so daß diese Spannung entfällt.

Die Brückenspannung $U_{Br}$ liegt am Widerstand 36 an.

Durch die Schaltung gemäß der Erfindung, bei der die Brükkenspannung - wie nachgewiesen - unerheblich ist, solange sie ausreichend hoch ist, wird erreicht, daß das Gerät in äußerst weiten Grenzen temperaturunabhängig ist. Der geforderte Bereich für Temperaturunabhängigkeit liegt - wie oben bereits angegeben - zwischen -5 und +50° C. Die Schaltung gemäß der Erfindung ermöglicht es, diese Temperaturgrenzen nach unten und nach oben um jeweils 15 bis 20° auszuweiten.

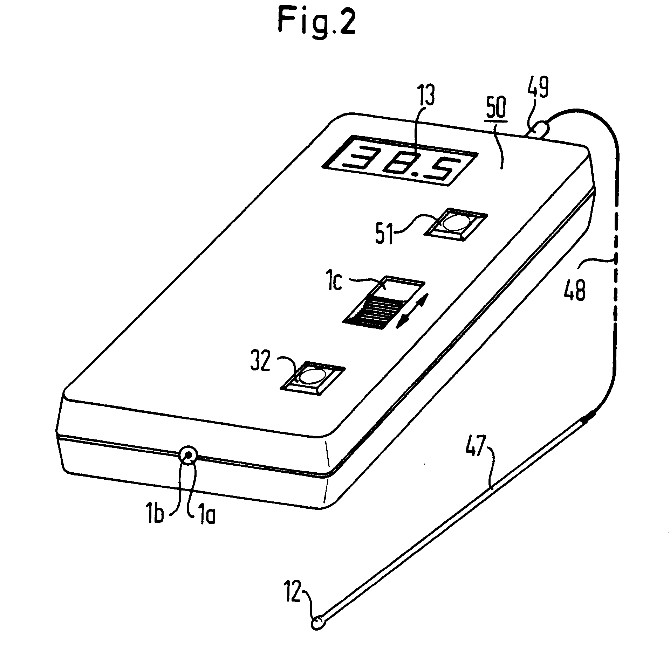

Fig. 2 zeigt das Gerät samt Fühlerelement. Der Heißleiter 12 ist in einem Stab 47 an der Spitze desselben untergebracht. Der Stab 47 ist über ein Kabel 48 und einen Stecker 49 mit dem Gerät 50 verbunden. Das Kabel 48 kann je nach Anwendungszweck unterschiedlich lang sein und auch der Stab 47 kann für den Anwendungszweck ausgebildet sein, beispielsweise für die Messung der Körpertemperatur (oral oder rektal) oder auch zur Messung der Temperatur begrenzter Hautoberflächenteile. Es ist auch möglich, den Stab 47 sehr kurz und in den Abmessungen sehr klein zu machen, so daß das Fühlerelement mit einem relativ langen Kabel 48 auch als Sonde benutzt werden kann, die beispielsweise in den Magen oder in die Galle eingeführt wird, damit die Temperatur dieser Organe gemessen werden kann. Schließlich kann das Fühlerelement mit dem Gerät 50 mechanisch starr verbunden sein. Dies hat den Vorteil, daß bei Messung der Temperatur örtlich begrenzter Bereiche die Temperaturmessung mit einer Hand ausgeführt werden kann.

Die Kontakte 1a und 1b der Koaxialbuchse dienen zum Anschluß eines Ladegerätes. Bei Betätigung des Tastschalters 32 erscheint auf der digitalem Anzeigevorrichtung 13 der Vergleichswert 38,5, wodurch die funktionsgerechte Arbeitsweise des Gerätes angezeigt wird. Mit dem Schalter 1c wird das Gerät ein- und ausgeschaltet. Die Taste 51 dient dazu, die Anzeigevorrichtung 13 mit einer Leuchtdiode zu beleuchten, falls die Umgebungshelligkeit nicht hoch genug ist, um die in der Anzeigevorrichtung 13 enthaltenen Flüssigkristalle in Erscheinung treten zu lassen.

2 Figuren
2 Ansprüche

<u>Patentansprüche</u>

1. Thermometer mit digitaler Anzeigevorrichtung des Temperaturwertes der Körpertemperatur, das einen Temperaturfühler mit einem Heißleiter als elektrischem Fühlerelement und ein damit mittels eines Kabels elektrisch und ggf. mechanisch verbundenes Gerät enthält, in welchem die digitale Anzeigevorrichtung und eine elektronische Schaltung untergebracht sind, die aus einer Verschaltung von integrierten Schaltungen, Transistoren und passiven Bauelementen besteht, den analog zur Abhängigkeit von der Temperatur des Körpers sich einstellenden Widerstandswert des Heißleiters zur digitalen Anzeige umwandelt und von einer stabilisierten Spannungsquelle gespeist wird, d a d u r c h  g e k e n n z e i c h n e t, daß die elektronische Schaltung wie folgt aufgebaut ist:

a) eine von einer Spannungsquelle (1) gespeiste Spannungsvervielfachung (A) mit einem Operationsverstärker (2) speist über einen Abschalttransistor (3) eine als Baustein ausgeführte integrierte Schaltung (4);

b) die integrierte Schaltung (4) ist ein an sich bekanntes komplettes 3 1/2-stelliges Digital-Voltmeter, bestehend aus Analog-Digital-Wandler, Impulszähler, Decodierer, Anzeigeaufbereitung und Schaltungselementen (4a und 4b), die die Wirkungsweise und den Meßbereich der integrierten Schaltung (4) bestimmen;

c) eine der Überwachung der Spannungsquelle (1) dienende Kontrollschaltung (B) mit einem Operationsverstärker (5) schaltet bei einer für die Temperaturmessung zu geringen Batteriespannung den Transistor (3) und unterbricht damit die Versorgungsspannung für die integrierte Schaltung (4);

d) eine Teilschaltung (C) mit zwei Operationsverstärkern (6,7) erzeugt eine hochkonstante Spannung, die über
die Eingänge (45,46) als Referenzspannung für die integrierte Schaltung (4) und auch als Speisespannung für
eine Brückenschaltung (D) dient;

e) die Brückenschaltung (D) besteht aus vier hochkonstanten Widerständen (8,9,10 und 11) und dem als Fühler geschalteten Heißleiter (12);

f) eine Teilschaltung (E) paßt die von der Brückenschaltung (D) erzeugte Spannung der für die integrierte Schaltung (4) notwendigen Referenzspannung an;

g) von der integrierten Schaltung (4) wird die Anzeigevorrichtung (13) direkt angesteuert.

2. Medizinisches Thermometer nach Anspruch 1, d a d u r ch
g e k e n n z e i ch n e t, daß die Operationsverstärker (2,5,6 und 7) in einem separaten Baustein untergebracht sind.

Fig.1

## Fig.2

Europäisches
Patentamt

**EUROPÄISCHER RECHERCHENBERICHT**

0002788
Nummer der Anmeldung
EP 78 10 1770

| Kategorie | Kennzeichnung des Dokuments mit Angabe, soweit erforderlich, der maßgeblichen Teile | betrifft Anspruch |
|---|---|---|
| | ELECTRONICS DESIGN, vol. 25, no. 10, May 10, '}77 Rochelle Park APPLICATIONS CORNER: "How to build a Digital Thermometer" Seite 25.  * Seite 25 * | 1 |
| | US - A - 3 822 598 (B.H. BROTHERS et al.)  * Einführung; Spalte 4, Zeile 7 - Spalte 5, Zeile 43; Spalte 6, Zeile 56 - Spalte 7, Zeile 10; Figuren 1,3 * | 1 |
| P | US - A - 4 068 526 (H. GOLDSTEIN)  * Einführung; Spalte 2; Spalte 3; Spalte 4, Zeilen 1-9 und Zeilen 31-53; Figuren 2,4 * | 1 |
| A | US - A - 3 851 528 (H.F. NICHOLS)  * Einführung ; Spalte 5, Zeile 8 - Spalte 7, Zeile 45 * | 1 |
| A | AU - A - 488 012 (AMERICAN MEDICAL ELECTRONICS CORP.)  * Einführung; Seiten 4,5,7 * | 1 |

**EINSCHLÄGIGE DOKUMENTE**

KLASSIFIKATION DER ANMELDUNG (Int.Cl.²)

G 01 K   1/02
         13/00
          7/24
A 61 B   5/00

RECHERCHIERTE SACHGEBIETE (Int. Cl.²)

G 01 K   1/02
          7/20
          7/24
         13/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort Den Haag | Abschlußdatum der Recherche 29-03-1979 | Prüfer VISSER |
|---|---|---|